Europäisches Patentamt

European Patent Office

Office européen des brevets

(11) Publication number: **0 406 870 A2**

# EUROPEAN PATENT APPLICATION

(21) Application number: 90112874.4

(22) Date of filing: 05.07.90

(51) Int. Cl.⁵: **G09G 3/36, G02F 1/1345**

(30) Priority: 05.07.89 JP 174620/89

(43) Date of publication of application:
**09.01.91 Bulletin 91/02**

(84) Designated Contracting States:
**DE FR GB**

(71) Applicant: NEC CORPORATION
7-1, Shiba 5-chome Minato-ku
Tokyo 108-01(JP)

(72) Inventor: Shimizu, Toshikazu, C/o NEC
Corporation
7-1 Shiba 5-chome
Minato-ku, Tokyo(JP)

(74) Representative: Glawe, Delfs, Moll & Partner
Patentanwältelte
Postfach 26 01 62 Liebherrstrasse 20
D-8000 München 26(DE)

(54) Active matrix liquid crystal display having reduced drain bus lines.

(57) An active matrix liquid crystal display comprises a plurality of pixels arranged to form a pixel matrix having M rows and N columns where M is a natural number and N is an even natural number, and each of the pixels has a common electrode, an individual electrode connected to one end of a current path of one associated transistor, and a liquid crystal material sandwiched between the common electrode and the individual electrode. Also, the display comprises N/2 drain bus lines arranged to form N/2 columns, and 2M gate bus lines arranged to form 2M rows. A (j)th drain bus line of the N/2 drain bus lines is connected to the other end of the current path of each of transistors associated to pixels of (2j-1)th and (2j)th columns of the pixel matrix where j = 0 to N/2. A (2i-1)th gate bus line of the 2M gate bus lines is connected to a control electrode of each of transistors associated to (2k-1)th pixels positioned at a (i)th row of the pixel matrix where i = 1 to M and k = 1 to N/2, and a (2i)th gate bus line of the 2M gate bus lines is connected to a control electrode of each of transistors associated to (2k)th pixels positioned at the (i)th row of the pixel matrix.

FIGURE 1

# ACTIVE MATRIX LIQUID CRYSTAL DISPLAY HAVING REDUCED DRAIN BUS LINES

Background of the Invention

Field of the invention

The present invention relates to a liquid crystal display, and more specifically to an active matrix liquid crystal display.

Description of related art

Conventional active matrix liquid crystal displays include a plurality of gate bus lines and a plurality of drain bus lines arranged in the form of a matrix. At each intersection between the gate bus lines and the drain bus lines, one transistor and one associated display element or pixel are located in such a manner that a gate of the transistor is connected to a corresponding gate bus line and a drain of the transistor is connected to a corresponding drain bus line and also a source of the transistor is connected to an individual electrode of the associated pixel. Therefore, each of the gate bus lines corresponds to one row of pixels, and each of the drain bus lines corresponds to one column of pixels. With this arrangement, while data signals are individually and simultaneously applied to the drain bus lines in parallel, a high voltage scan signal is selectively applied to one of the gate bus lines so as to turn on all the transistors connected to the selected gate bus line, so that the respective data signals on the drain bus lines are written to the corresponding pixels. This operation is repeated by scanning the gate bus lines while updating data signals on the drain bus lines, and when all the gate bus lines have been scanned, one complete image is displayed on the liquid crystal display panel.

As mentioned above, the conventional active matrix liquid display panel has been such that one column of pixels corresponds to one drain bus line. In other words, one drain bus line driver has been required for each one column of pixels. However, the drain bus line driver has to be capable of handling a video signal having a very wide frequency range and is required to operate at a very high data rate. Therefore, the drain bus line driver is very expensive. In the conventional active matrix liquid display, accordingly, the larger the number of pixels becomes, the number of required drain bus line drivers also becomes larger, and therefore, more expensive.

Summary of the Invention

Accordingly, it is an object of the present invention to provide an active matrix liquid display which has overcome the above mentioned defect of the conventional one.

Another object of the present invention is to provide an active matrix liquid display having a reduced number of drain bus line drivers.

The above and other objects of the present invention are achieved in accordance with the present invention by an active matrix liquid crystal display comprising a plurality of pixels arranged to form a pixel matrix having M rows and (N × P) columns where M, N and P are natural numbers not less than 2, each of the pixels having a common electrode, an individual electrode connected to one end of a current path of one associated transistor, and a liquid crystal material sandwiched between the common electrode and the individual electrode, N drain bus lines arranged to form N columns, and (M × P) gate bus lines arranged to form (M × P) rows, a (j)th drain bus line of the N drain bus lines being connected to the other end of the current path of each of transistors associated to pixels of (P × j - S)th columns of the pixel matrix where j = 1 to N and S = 0 to (P-1), and a (P × i - S)th gate bus line of the (M × P) gate bus lines being connected to a control electrode of each of transistors associated to (P × i - S)th pixels positioned at a (i)th row of the pixel matrix where i = 1 to M.

In a simple embodiment, an active matrix liquid crystal display comprises a plurality of pixels arranged to form a pixel matrix having M rows and N columns where M is a natural number and N is an even natural number, each of the pixels having a common electrode, an individual electrode connected to one end of a current path of one associated transistor, and a liquid crystal material sandwiched between the common electrode and the individual electrode, N/2 drain bus lines arranged to form N/2 columns, and 2M gate bus lines arranged to form 2M rows, a (j)th drain bus line of the N/2 drain bus lines being connected to the other end of the current path of each of transistors associated to pixels of (2j-1)th and (2j)th columns of the pixel matrix where j = 0 to N/2, and a (2i-1)th gate bus line of the 2M gate bus lines being connected to a control electrode of each of transistors associated to (2k-1)th pixels positioned at a (i)th row of the pixel matrix, and a (2i)th gate bus line of the 2M gate bus lines being connected to a control electrode of each of transistors associated to (2k)th pixels positioned at the (i)th row of the pixel matrix where i = 1 to M and k = 1 to N/2.

The above and other objects, features and advantages of the present invention will be apparent from the following description of preferred embodiments of the invention with reference to the accompanying drawings.

Brief Description of the Drawings

Figure 1 is an equivalent circuit diagram of one embodiment of the active matrix liquid crystal display in accordance with the present invention;
Figure 2 illustrates an arrangement of display elements in the active matrix liquid crystal display shown in Figure 1;
Figure 3 is a timing chart illustrating data signals and scan signals applied to the active matrix liquid crystal display shown in Figure 1; and
Figure 4 is another timing illustrating data signals and scan signals applied to the active matrix liquid crystal display shown in Figure 1.

Description of the Preferred embodiments

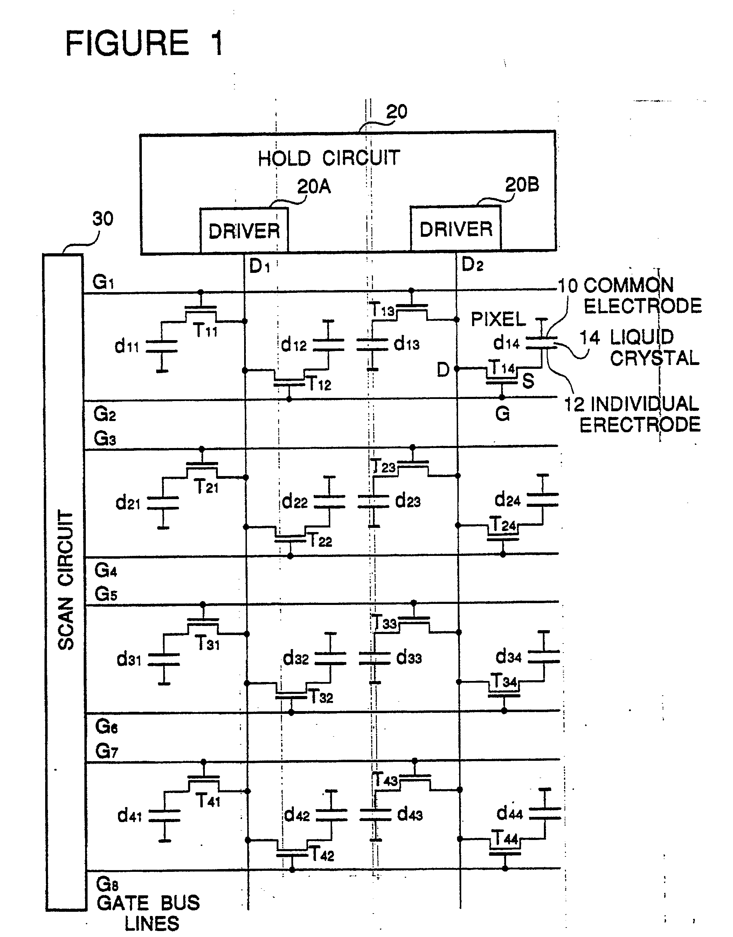

Referring to Figure 1, there is shown an equivalent circuit diagram of one embodiment of the active matrix liquid crystal display in accordance with the present invention. For simplification of the drawing and explanation, the shown active matrix liquid crystal display is composed of 16 display elements of pixels $d_{ij}$ arranged in the form of a matrix having four rows and four columns (the suffix "i" is a row number of 1 to 4 and the suffix "j" is a column number of 1 to 4). Each of the pixels $d_{ij}$ has a common electrode 10, an individual display electrode 12 and a liquid crystal material 14 sandwiched between the common electrode 10 and the individual electrode 12. The common electrode 10 of each pixel is common to all the pixels and is ordinarily grounded. On the other hand, the individual electrode is connected to one end of a current path of an associated thin film transistor (TFT) Tij, for example, a source of the associated TFT transistor Tij.

The shown embodiment includes two drain bus lines $D_1$ and $D_2$ which extend in a direction of the columns of the pixel matrix, and which are driven by corresponding drain bus line drivers 20A and 20B of a hold circuit 20, which operates to receive a serial video signal and to hold and output the received video signal in parallel. On the other hand, the shown embodiment includes eight gate bus lines $G_1$ to $G_8$ which extend in a direction of the rows of the pixel matrix, and which are sequentially scanned by a scan circuit 30. The drain bus line $D_1$ is connected to a drain of each of the transistors $T_{11}$, $T_{12}$, $T_{21}$, $T_{22}$, $T_{31}$, $T_{32}$, $T_{41}$ and $T_{42}$ respec-

tively associated to the pixels $d_{11}$, $d_{12}$, $d_{21}$, $d_{22}$, $d_{31}$, $d_{32}$, $d_{41}$ and $d_{42}$. The drain bus line $D_2$ is connected to a drain of each of the transistors $T_{13}$, $T_{14}$, $T_{23}$, $T_{24}$, $T_{33}$, $T_{34}$, $T_{43}$ and $T_{44}$ respectively associated to the pixels $d_{13}$, $d_{14}$, $d_{23}$, $d_{24}$, $d_{33}$, $d_{34}$, $d_{43}$ and $d_{44}$. On the other hand, the gate bus line $G_1$ is connected to a gate of each of the transistors $T_1$ and $T_{13}$ respectively associated to the pixels $d_{11}$ and $d_{13}$, and the gate bus line $G_2$ is connected to a gate of each of transistors $T_{12}$ and $T_{14}$ respectively associated to the pixels $d_{12}$ and $d_{14}$. Similarly, the gate bus line $G_3$ is connected to a gate of each of the transistors $T_{21}$ and $T_{23}$ respectively associated to the pixels $d_{21}$ and $d_{23}$, and the gate bus line $G_4$ is connected to a gate of each of the transistors $T_{22}$ and $T_{24}$ respectively associated to the pixels $d_{22}$ and $d_{24}$. In addition, the gate bus line $G_5$ is connected to a gate of each of the transistors $T_{31}$ and $T_{33}$ respectively associated to the pixels $d_{31}$ and $d_{33}$, and the gate bus line $G_6$ is connected to a gate of each of the transistors $T_{32}$ and $T_{34}$ respectively associated to the pixels $d_{32}$ and $d_{34}$. The gate bus line $G_7$ is connected to a gate of each of the transistors $T_{41}$ and $T_{43}$ respectively associated to the pixels $d_{41}$ and $d_{43}$, and the gate bus line $G_8$ is connected to a gate of each of the transistors $T_{42}$ and $T_{44}$ respectively associated to the pixels $d_{42}$ and $d_{44}$.

As seen from the above, two columns of pixels are connected to one drain bus line through their associated transistors, and one pair of gate bus lines are provided for one row of pixels and connected in such a manner that one half of one row of pixels are connected to one gate bus line, and the other half of the same row of pixels are connected to the other gate bus line.

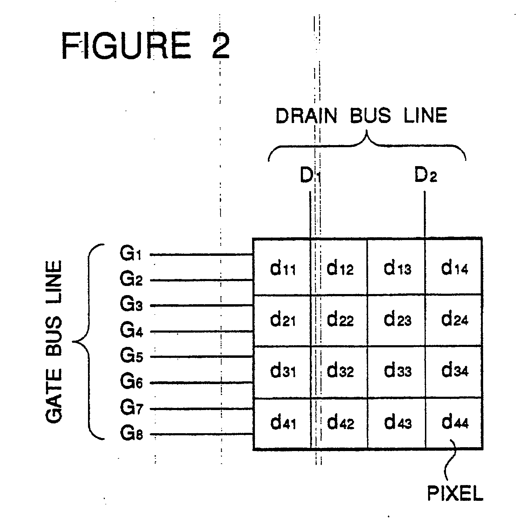

Thus, the arrangement of the pixels, the drain bus lines and the gate bus lines as shown in Figure 2 can be obtained.

Generalizing the arrangement shown in Figure 1, the shown active matrix liquid crystal display can be said to include a plurality of pixels arranged to form a pixel matrix having M rows and (N × P) columns where M, N and P are natural numbers not less than 2. In the case of the shown embodiment, M = 4, N = 2, and P = 2. Each of the pixels has a common electrode, and individual display electrode connected to one end of a current path of one associated transistor, and a liquid crystal material sandwiched between the common electrode and the individual display electrode. The active matrix liquid crystal display also includes N drain bus lines arranged to form N columns, and (M × P) gate bus lines arranged to form (M × P) rows. The pixels, the gate bus lines and the drain bus lines are connected in such a manner that a (j)th drain bus line of the N drain bus lines is connected to the other end of the current path of each of transistors associated to pixels of (P × j - S)th columns of the pixel matrix where j = 1 to N and S = 0 to (P-1), and a (P × i - S)th gate bus line of the (M × P) gate bus lines is connected to a control electrode of each of transistors associated to (P × i - S)th pixels positioned at a (i)th row of the pixel matrix where i = 1 to M.

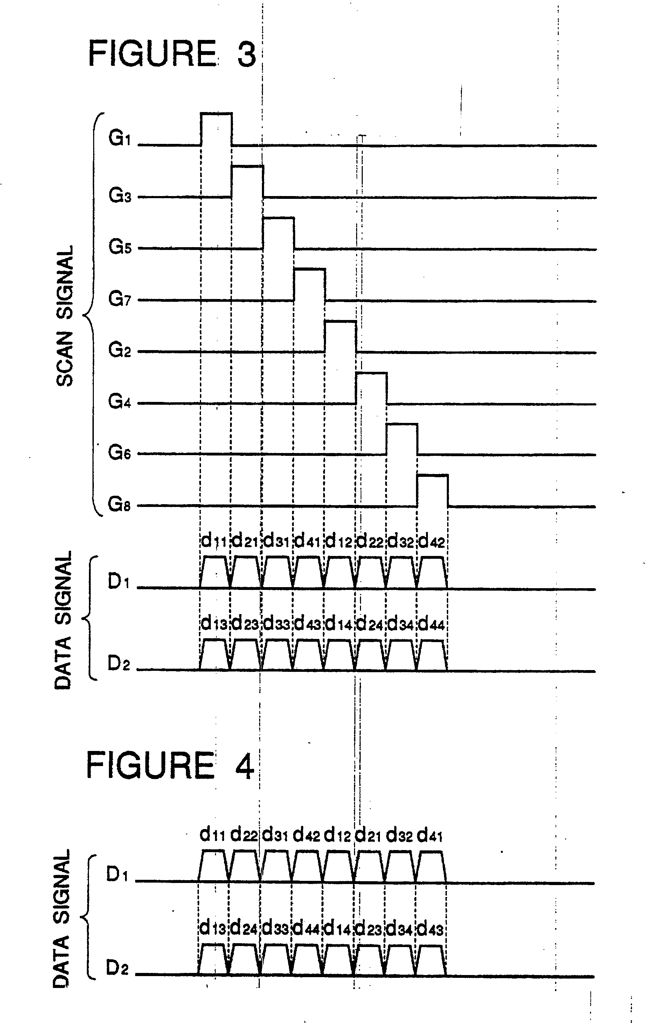

Now, a manner for driving the display shown in Figure 1 will be explained with reference to Figure 3.

As shown in Figure 3, a high voltage scan signal is applied to the gate bus lines in the named order of $G_1$, $G_3$, $G_5$, $G_7$, $G_2$, $G_4$, $G_6$ and $G_8$ so as to sequentially scan the gate bus lines in the order. The transistor receiving the high voltage scan signal operates to write data appearing on the corresponding drain bus line into the associated pixel. On the other hand, data signals are supplied to the two drain bus lines $D_1$ and $D_2$ in such a manner that data signals for the pixels $d_{11}$, $d_{21}$, $d_{31}$, $d_{41}$, $d_{12}$, $d_{22}$, $d_{32}$ and $d_{42}$ are sequentially outputted to the drain bus line $D_1$ in synchronism with the scan signals sequentially supplied to the gate bus lines $G_1$, $G_3$, $G_5$, $G_7$, $G_2$, $G_4$, $G_6$ and $G_8$, and data signals for pixels $d_{13}$, $d_{23}$, $d_{33}$, $d_{43}$, $d_{14}$, $d_{24}$, $d_{34}$ and $d_{44}$ are sequentially outputted to the drain bus line $D_2$ in synchronism with the scan signals sequentially supplied to the gate bus lines $G_1$, $G_3$, $G_5$, $G_7$, $G_2$, $G_4$, $G_6$ and $G_8$.

Turning to Figure 4, there is shown a timing chart illustrating another method for driving the drain bus lines under the condition in which the gate bus lines are scanned as in shown in Figure 3.

In this case, data signals are supplied to the two drain·bus lines $D_1$ and $D_2$ in such a manner that data signals for the pixels $d_{11}$, $d_{22}$, $d_{31}$, $d_{42}$, $d_{12}$, $d_{21}$, $d_{32}$ and $d_{41}$ are sequentially outputted to the drain bus line $D_1$ in synchronism with the scan signals sequentially supplied to the gate bus lines $G_1$, $G_3$, $G_5$, $G_7$, $G_2$, $G_4$, $G_6$ and $G_8$, and data signals for pixels $d_{13}$, $d_{24}$, $d_{33}$, $d_{44}$, $d_{14}$, $d_{23}$, $d_{34}$ and $d_{43}$ are sequentially outputted to the drain bus line $D_2$ in synchronism with the scan signals sequentially supplied to the gate bus lines $G_1$, $G_3$, $G_5$, $G_7$, $G_2$, $G_4$, $G_6$ and $G_8$. In this manner, the pixels are driven in a staggered or zigzag pattern, so that lighted pixels are equally distributed. Therefore, a so-called light flicker can be prevented.

As seen from the above, the active matrix liquid crystal display in accordance with the present invention is such that a plurality of rows of pixels are driven by one drain bus line. Therefore, the number of required drivers for the drain bus lines can be reduced to one-half or less. Accordingly, the cost of the active matrix liquid crystal display can greatly decreased, and a electric current consumption is also greatly decreased.

The invention has thus been shown and described with reference to the specific embodiments. However, it should be noted that the present invention is in no way limited to the details of illustrated structures but changes and modifications may be made within the scope of the appended claims.

## Claims

1. An active matrix liquid crystal display comprising a plurality of pixels arranged to form a pixel matrix having M rows and (N × P) columns where M, N and P are natural numbers not less than 2, each of the pixels having a common electrode, an individual electrode connected to one end of a current path of one associated transistor, and a liquid crystal material sandwiched between the common electrode and the individual electrode, N drain bus lines arranged to form N columns, and (M × ·P) gate bus lines arranged to form (M × P) rows, a (j)-th drain bus line of the N drain bus lines being connected to the other end of the current path of each of transistors associated to pixels of (P × j - S)th columns of the pixel matrix where j = 1 to N and S = 0 to (P-1), and a (P × i - S)th gate bus line of the (M × P) gate bus lines being connected to a control electrode of each of transistors associated to (P × i - S)th pixels positioned at a (i)th row of the pixel matrix where i = 1 to M.

2. A active matrix liquid crystal display claimed in Claim 1 wherein P = 2.

3. A active matrix liquid crystal display claimed in Claim 1 further including a scan means connected to all the gate bus lines for sequentially supplying scan signals to the gate bus lines, one at a time, and driving means connected to all the drain bus lines for supplying corresponding data signals to the drain bus lines, in parallel, in synchronism with the scan signals applied to the gate bus lines.

4. An active matrix liquid crystal display comprising a plurality of pixels arranged to form a pixel matrix having M rows and N columns where M is a natural number and N is an even natural number, each of the pixels having a common electrode, an individual electrode connected to one end of a current path of one associated transistor, and a liquid crystal material sandwiched between the common electrode and the individual electrode, N/2 drain bus lines arranged to form N/2 columns, and 2M gate bus lines arranged to form 2M rows, a (j)th drain bus line of the N/2 drain bus lines being connected to the other end of the current path of each of transistors associated to pixels of (2j-1)th and (2j)th columns of the pixel matrix where j = 0 to N/2, and a (2i-1)th gate bus line of the 2M gate bus lines being connected to a control electrode of each of transistors associated to (2k-1)th pixels positioned at a (i)th row of the pixel matrix, and a (2i)th gate bus line of the 2M gate bus lines being connected to a control electrode of each of transistors associated to (2k)th pixels positioned at the (i)-th row of the pixel matrix where i = 1 to M and k = 1 to N/2.

# FIGURE 1

# FIGURE 2

DRAIN BUS LINE

$D_1$  $D_2$

| | | | |
|---|---|---|---|
| $d_{11}$ | $d_{12}$ | $d_{13}$ | $d_{14}$ |
| $d_{21}$ | $d_{22}$ | $d_{23}$ | $d_{24}$ |
| $d_{31}$ | $d_{32}$ | $d_{33}$ | $d_{34}$ |
| $d_{41}$ | $d_{42}$ | $d_{43}$ | $d_{44}$ |

GATE BUS LINE

$G_1$
$G_2$
$G_3$
$G_4$
$G_5$
$G_6$
$G_7$
$G_8$

PIXEL

# FIGURE 3

# FIGURE 4